# FASCICULE DE BREVET EUROPEEN

(11) **EP 3 347 147 B1**
(45) Date de publication et mention de la délivrance du brevet: **01.05.2019**
(21) Numéro de dépôt: 16775806.9
(22) Date de dépôt: 08.09.2016
(51) Int. Cl.: B21D 53/78, F01D 5/28, B23P 15/04

(54) **PROCEDE DE FABRICATION D'UN RENFORT DE PROTECTION POUR UNE AUBE PRESENTANT UN BORD D'ATTAQUE OU DE FUITE COURBE**
VERFAHREN ZUR HERSTELLUNG EINER SCHÜTZENDEN VERSTÄRKUNG FÜR EINE SCHAUFEL (P) MIT EINER GEKRÜMMTEN VORDERKANTE ODER HINTERKANTE
METHOD FOR PRODUCING A PROTECTIVE REINFORCEMENT FOR A BLADE (P) HAVING A CURVED LEADING EDGE OR TRAILING EDGE

(30) Priorité: 10.09.2015 FR 1558442
(43) Date de publication de la demande: 18.07.2018
(73) Titulaire: Safran Aircraft Engines, 75015 Paris (FR)
(72) Inventeur: ONFRAY, Rémi, Philippe, Guy, 77550 Moissy-Cramayel (FR); BRIEND, Maxime, 77550 Moissy-Cramayel (FR); PELLETIER, Didier, 77550 Moissy-Cramayel (FR)
(74) Mandataire: Regimbeau
(86) Numéro de dépôt international: PCT/FR2016/052248
(87) Numéro de publication internationale: WO 2017/042497

(56) Documents cités:
- FR-A1- 2 954 200
- FR-A1- 2 965 498
- FR-A1- 2 972 124
- FR-A1- 2 992 887
- FR-A1- 3 012 515

## Description

### DOMAINE DE L'INVENTION

La présente invention concerne un procédé de fabrication d'un renfort de protection pour protéger le bord d'attaque ou de fuite courbe d'une aube selon le préambule de la revendication 1.

### ETAT DE LA TECHNIQUE

Certaines aubes, notamment des aubes comprises dans des parties de turbomachines telles que des redresseurs ou des roues mobiles, nécessitent la mise en place d'un renfort pour protéger leur bord d'attaque contre des impacts et l'érosion, et/ou protéger leur bord de fuite.

Conventionnellement, un renfort de protection de bord d'attaque ou de fuite présente la forme d'un clinquant à deux flancs présentant un profil en V ou U, les flancs étant reliés par un bord d'attaque rectiligne. L'un des flancs est rapporté sur l'intrados de l'aube, l'autre flanc rapporté sur l'extrados de l'aube, et le bord d'attaque rectiligne du renfort est rapporté sur le bord d'attaque de l'aube, lui aussi rectiligne.

La forme du renfort est complémentaire de l'aube pour garantir une fixation solide du renfort sur celle-ci et ne pas modifier les caractéristiques géométriques de l'aube.

Le renfort est typiquement fabriqué à partir d'une tôle, laquelle est repliée sur elle-même, de sorte à former une ligne de pliage définissant son bord d'attaque. De tels procédés de fabrications sont décrits dans les documents FR2954200, qui correspond par exemple au préambule de la revendication 1, FR2965498, FR2992887, FR3012515 ou FR2972124.

Or, la géométrie des aubes évolue vers des formes tridimensionnelles complexes mais tout en étant d'épaisseur relativement faible entre son extrados et son intrados (entre 0,1 et 0,5 millimètres).

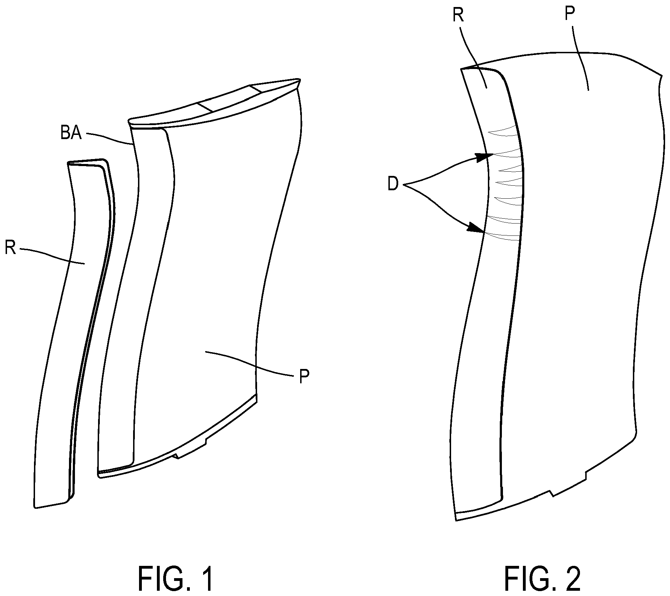

Une telle aube P à forme complexe est illustrée sur les **figures 1 et 2****.**

L'aube P présente un bord d'attaque BA qui n'est pas rectiligne ; le bord d'attaque rectiligne d'un renfort RA obtenu par pliage d'une tôle n'est donc pas complémentaire du bord d'attaque courbe BA de l'aube.

Pour faire en sorte que le bord d'attaque BA du renfort épouse bien le bord d'attaque de l'aube sur laquelle le renfort est à rapporter, il pourrait être envisagé de déformer le renfort R par un poinçonnage à froid.

Or, un tel poinçonnage à froid est susceptible de créer des ondulations et pliures référencées D sur la figure 2, et qui sont nuisibles à la tenue mécanique et à l'aérodynamisme du renfort R.

### EXPOSE DE L'INVENTION

Un but poursuivi par l'invention est d'éviter la formation de pliures ou d'ondulations sur un renfort de protection destiné à protéger un bord d'attaque ou de fuite courbe d'aube, au cours de sa fabrication ou de son assemblage avec l'aube.

Il est dès lors proposé un procédé de fabrication d'un renfort de protection du bord d'attaque ou de fuite d'une aube, le bord d'attaque ou de fuite étant courbe, le procédé selon la présente invention comprenant des étapes de :
- aplatissage d'un tube creux de sorte à former au moins une ligne de pliage s'étendant le long du tube,
- ouverture du tube aplati par découpage du tube le long d'une ligne de découpe opposée à la ligne de pliage par rapport au tube, de sorte à former deux flancs reliés à la ligne de pliage et destinés à être rapportés sur l'intrados et l'extrados de l'aube,
le procédé étant caractérisé par une étape préliminaire de :
- cintrage du tube creux réalisé avant l'aplatissage et adapté pour que la ligne de pliage après aplatissage soit courbe et sensiblement complémentaire du bord d'attaque ou de fuite courbe de l'aube.

Le cintrage permet de réaliser une déformation plastique tridimensionnelle du renfort avant l'étape d'emboutissage, si bien que le bord d'attaque ou de fuite du renfort puisse être mis en contact avec le bord correspondant de l'aube sur toute sa longueur. Aucune déformation supplémentaire du renfort susceptible de créer des ondulations ou pliures n'est alors effectuée lorsqu'il est rapporté sur l'aube.

L'invention peut également être complétée par les caractéristiques optionnelles suivantes selon les modes de réalisations préférés qui sont définis dans les revendications dépendantes:
- le cintrage est un cintrage à froid,
- l'aplatissage du tube creux forme sur le tube deux lignes de pliage opposées, la ligne de découpe étant l'une des deux lignes de pliage,
- le tube est en métal,
- le procédé comprend en outre une étape d'emboutissage du tube ouvert de sorte à conformer les flancs de façon complémentaire à l'intrados et l'extrados de l'aube,
- le tube ouvert est embouti au moyen d'un poinçon dans une gorge formée dans une matrice, la gorge étant de profondeur adaptée pour qu'au moins un des flancs du tube présente une partie d'extrémité libre dépassant hors de la gorge lorsque la ligne de pliage est en butée contre le fond de la gorge, le procédé comprenant en outre une découpe de la partie d'extrémité libre,
- le tube 1 ouvert est embouti au moyen d'un poinçon dans une gorge formée dans une matrice, la gorge présentant deux ouvertures latérales opposées et une longueur mesurée entre les deux ouvertures latérales inférieure à la longueur de la ligne de pliage du tube 1 ouvert, le tube 1 ouvert étant positionné de sorte que deux parties d'extrémité longitudinale libres dépassent hors des deux ouvertures latérales de la gorge, le procédé comprenant en outre la découpe d'au moins une desdites parties d'extrémité longitudinale libres,
- au moins une découpe est une découpe au laser,
- au moins une découpe comprend une électro-érosion par fil.

Il est également proposé un procédé de fabrication d'une aube renforcée présentant un bord d'attaque courbe, le procédé comprenant des étapes de :
- fabrication d'un renfort de protection à l'aide du procédé selon l'invention,
- fixation du renfort de protection sur une aube, la ligne de pliage du renfort étant rapportée contre le bord d'attaque de l'aube et les flancs.

### DESCRIPTION DES FIGURES

D'autres caractéristiques préférées, buts et avantages de l'invention ressortiront de la description qui suit, qui est purement illustrative, et qui doit être lue en regard des dessins annexés sur lesquels :
- les figures 1 et 2, déjà discutées, sont deux vues en perspective latérale d'une aube à bord d'attaque courbe et d'un renfort de protection du bord d'attaque, avant et après leur assemblage ;
- la figure 3 est un organigramme d'étapes d'un procédé de fabrication d'un renfort de protection d'un bord d'attaque, selon un mode de réalisation de l'invention.
- les figures 4 à 10 représentent un renfort de protection à différents stades de sa fabrication au moyen du procédé de la figure 3.

Sur l'ensemble des figures, les éléments similaires portent des références identiques.

### DESCRIPTION DETAILLEE DE L'INVENTION

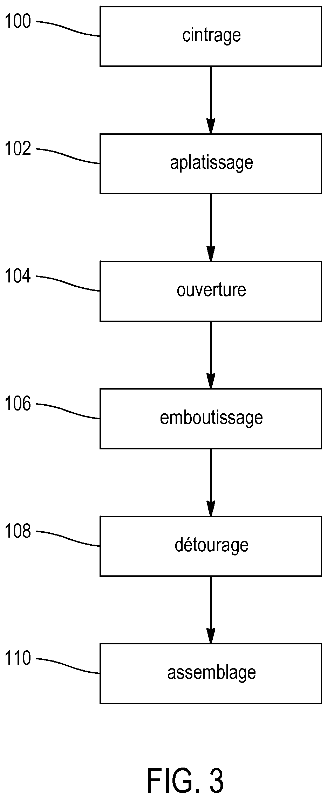

La fabrication d'un renfort de protection pour protéger le bord d'attaque BA d'une aube P telle que celle représenté en figures 1 et 2 déjà discutées en introduction est mise en oeuvre au moyen des étapes de l'organigramme de la **figure 3**.

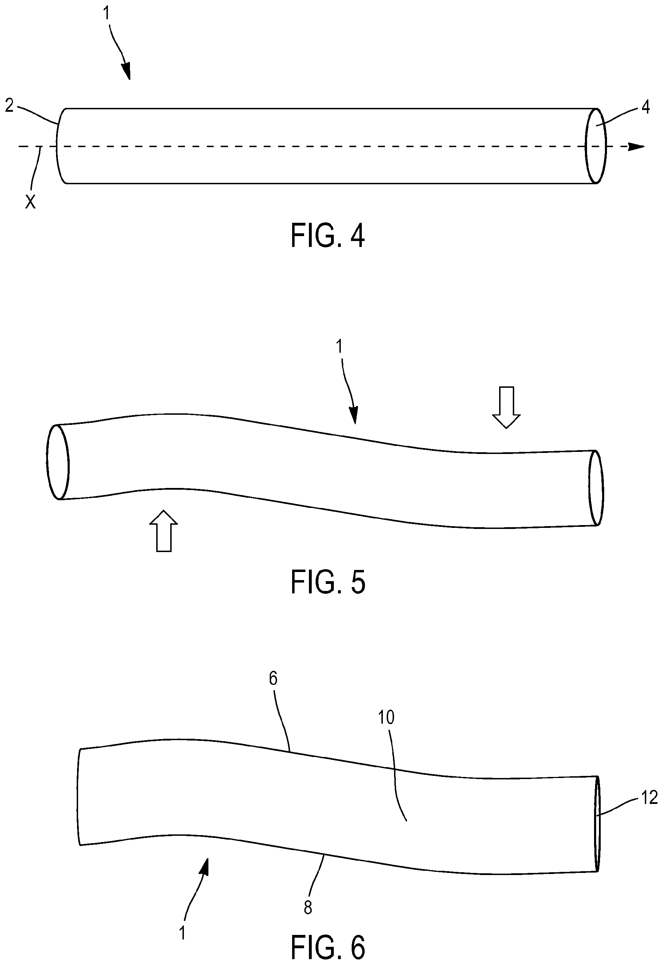

En référence à la **figure 4**, la fabrication d'un renfort de protection selon un mode de réalisation de l'invention est réalisée à partir d'un tube 1 creux.

Le tube 1 présente une forme cylindrique de révolution par rapport à un axe longitudinal X. Les surfaces radialement interne et externe du tube 1 sont des surfaces réglées dont toutes les génératrices sont parallèles à l'axe longitudinal X.

Le tube 1 présente deux extrémités longitudinales opposées 2 et 4, que l'on qualifiera dans la suite de base 2 et de sommet 4 du tube 1.

Le tube est ouvert à sa base 2 et à son sommet 4.

Le tube 1 présente par exemple un diamètre de 10 millimètres à 100 millimètres, et une épaisseur radiale de 0,1 millimètre à 0,5 millimètres.

Le tube 1 est en métal.

Dans une première étape 100, le tube 1 fait l'objet d'un cintrage.

Le cintrage 100 est un cintrage à chaud ou bien un cintrage à froid en fonction des matériaux utilisés.

Le cintrage à froid présente l'avantage d'être plus simple à mettre en oeuvre.

Lorsqu'un cintrage à chaud est mis en oeuvre, la température de cintrage est choisie en fonction du matériau du tube 1.

Le cintrage 100 suscite une déformation plastique du tube 1 entre sa base 2 et son sommet 4 si bien que les génératrices des surfaces radialement interne et externe du tube 1 creux ne sont plus rectilignes et parallèles à l'axe longitudinal X, mais courbes.

Le cintrage 100 est appliqué de sorte qu'au moins une des génératrices devienne une courbe dont le tracé est sensiblement confondu avec le tracé du bord d'attaque d'une aube (non représentée sur les figures) sur laquelle le renfort sera rapporté.

Plusieurs cintrages peuvent être mis en oeuvre de sorte à former des génératrices de forme courbe complexe.

Il est par exemple obtenu un tube 1 cintré tel que représenté sur la **figure 5**, présentant des génératrices dont le tracé forme un S, après cintrage suivant les flèches représentées sur la figure.

Dans une deuxième étape 102, le tube 1 cintré est aplati, typiquement au moyen d'une presse.

En référence à la **figure 6**, le tube 1 aplati ainsi obtenu présente deux parties sensiblement plates 16 et 18 en regard l'une de l'autre. Les deux parties plates 16, 18 sont reliées mutuellement par deux lignes de pliage 6 et 8 courbes et opposées par rapport au corps du tube aplati 1.

Le tube cintré est aplati 102 selon une direction adaptée pour que la ligne de pliage 6 soit sensiblement complémentaire du bord d'attaque de l'aube P.

De préférence, l'aplatissage 102 est réalisé avec une réserve de 2 millimètres.

Dans une troisième étape 104, une ouverture 14 est pratiquée dans le tube 1 sur toute sa longueur entre la base 2 et son sommet 4, par découpage du tube 1 le long d'une ligne de découpe opposée à la ligne de pliage 6.

La ligne de découpe est par exemple l'autre ligne de pliage courbe 8.

La découpe est par exemple une découpe au laser.

Alternativement, la découpe est mise en oeuvre par électro-érosion par fil (« Electrical Discharge Machining » ou EDM en anglais).

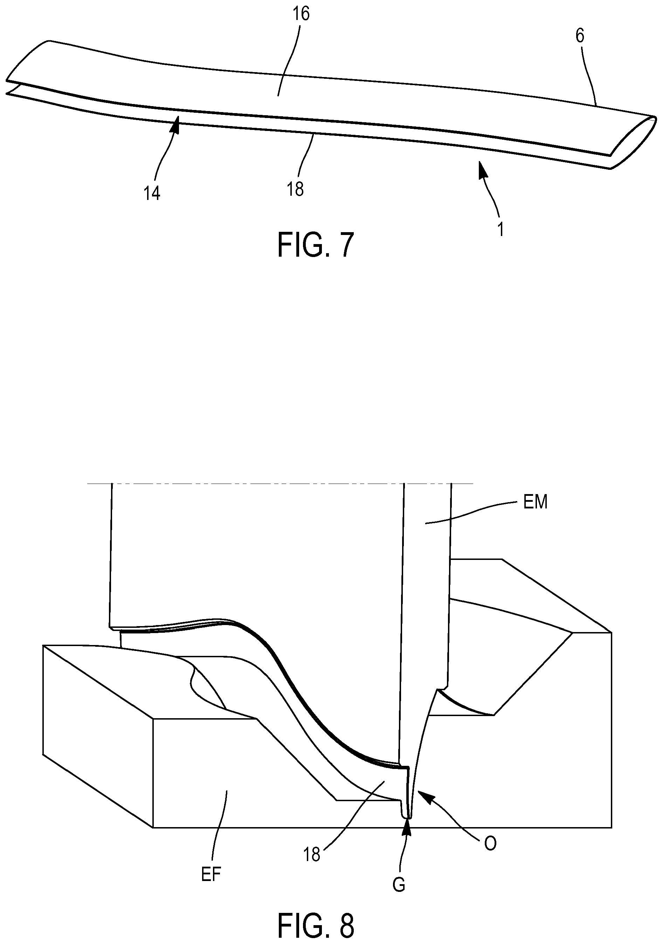

Ainsi, le tube 1 ouvert présente sur toute sa longueur une section sensiblement en V ou en U, comme représentée en **figure 7**.

Le tube 1 ouvert présente deux flancs reliés ensemble par la ligne de pliage 6 courbe laissée intacte, chaque flanc est formé par une des parties plates 16 et 18 du tube 1 aplati.

L'un des flancs 16 est destiné à être rapporté sur l'intrados de l'aube P, et l'autre flanc 18 est destiné à être rapporté sur l'extrados de l'aube P, l'intrados et l'extrados de l'aube P étant reliés l'un à l'autre par le bord d'attaque BA de l'aube P.

Si la ligne de découpe choisie est la ligne de pliages courbe 8, les deux flancs 16, 18 sont de mêmes dimensions.

Dans une quatrième étape, le tube 1 ouvert fait l'objet d'un emboutissage 106.

En référence à la **figure 8**, l'emboutissage est mis au moyen d'un outil d'emboutissage femelle EF, également appelé matrice, et d'un outil d'emboutissage mâle EM, également appelé poinçon.

Le poinçon EM présente une partie d'extrémité reproduisant parfaitement la forme de l'aube P sur laquelle le renfort en cours de fabrication est destiné à être rapporté.

La partie d'extrémité du poinçon comprend ainsi une face intrados reproduisant au moins partiellement l'intrados de l'aube, une face extrados reproduisant au moins partiellement l'extrados de l'aube, et une ligne courbe dont le tracé reproduit le tracé du bord d'attaque BA de l'aube P.

La matrice EF présente une gorge G de profil sensiblement complémentaire (à l'épaisseur radiale du tube 1 près) au profil du poinçon EM.

La gorge G présente une ouverture supérieure opposée à son fond, et deux extrémités latérales O (une seule de ces extrémités latérales O est visible sur la figure 8).

L'extrémité du poinçon EM est insérée à l'intérieur du tube 1 ouvert, via l'ouverture longitudinale O pratiquée sur toute la longueur du tube 1 entre sa base 2 et son sommet 4.

La partie d'extrémité du poinçon est positionnée contre la surface interne du tube 1 ouvert. Plus précisément, le bord interne de la ligne de pliage 6 du tube 1 laissée intacte est placé contre la ligne courbe à l'extrémité du poinçon EM.

L'emboutissage 106 est mis en oeuvre par insertion du poinçon recouvert par le tube 1 ouvert dans la gorge G de la matrice EF.

Au cours de cette insertion, les flancs du tube 1 ouvert subissent une déformation tridimensionnelle : ils sont pressés entre les bords de la gorge G et le poinçon EM.

Une fois que la ligne de pliage du tube 1 ouvert vient en butée contre le fond de la gorge G, les surfaces internes des flancs 16, 18 du tube 1 ouvert deviennent complémentaires des faces intrados et extrados du poinçon (et donc de l'aube P que reproduit le poinçon en partie).

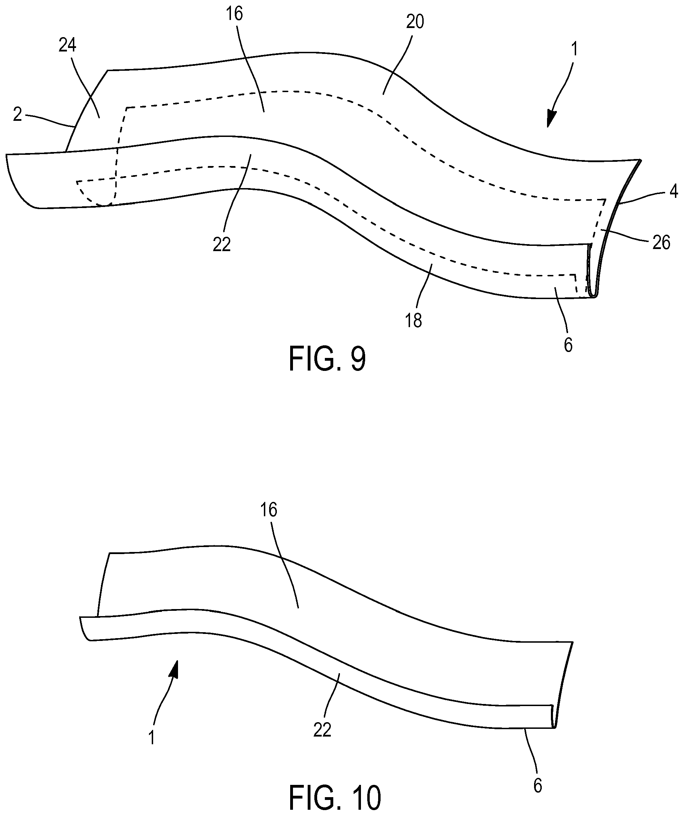

Comme il est représenté sur la figure 8, la gorge G est choisie de profondeur inférieure au périmètre de la section du tube 1, de sorte qu'une partie d'extrémité libre de chaque flanc dépasse hors de la gorge, lorsque la ligne de pliage 6 du tube 1 ouvert est en butée contre le fond de la gorge G (ces parties d'extrémité libres étant référencées 20 et 22 sur la **figure 9**).

Par ailleurs, la gorge G s'étend sur une longueur inférieure à la longueur du tube 1 mesurée entre sa base 2 et son sommet 4, la longueur de la gorge G étant égale à la longueur d'aube P destinée à être recouverte par le renfort en cours de fabrication. De la sorte, la base 2 et le sommet 4 du tube 1 embouti comprennent des parties d'extrémité libre 24, 26 dépassant hors de la gorge G par les ouvertures latérales O de la gorge G, lorsque la ligne de pliage 6 est en butée contre le fond de la gorge G.

Dans une cinquième étape 108, le tube 1 embouti subit un détourage.

Le détourage 108 est mis en oeuvre alors que le tube 1 est embouti dans la gorge G, la ligne de pliage 6 étant en butée contre le fond de la gorge G.

Le détourage 108 comprend la découpe d'au moins une des parties suivants du tube 1 dépassant hors de la gorge, considérées comme excédentaires :
- la partie d'extrémité libre 20, 22 de chaque flanc opposée à la ligne de pliage dépassant hors de la gorge ;
- la partie d'extrémité libre 24 de la base 2,
- une partie d'extrémité libre 26 du sommet 4.

Le détourage est mis en oeuvre par exemple par découpe au laser le long des lignes en pointillés représentées sur la figure 9.

Après détourage 108, les flancs 61 et 22 présentent des dimensions adaptées pour recouvrir partiellement l'intrados et l'extrados de l'aube de destination.

Il est ainsi obtenu un renfort de protection pour l'aube de destination, représenté en **figure 10**.

Au cours de la fabrication du renfort, le cintrage permet d'obtenir une ligne de pliage 6 dont le profil est proche de celui attendu en final avant l'étape d'emboutissage 106, qui est considérablement simplifiée car ne nécessite qu'une seule partie male EM et une seule partie femelle EF pour conformer définitivement le renfort de protection.

Le renfort est ensuite rapporté 110 sur l'aube de destination selon une technique de fixation conventionnelle connue de l'homme du métier. Le bord interne de la ligne de pliage 6 du renfort présente une courbure parfaitement complémentaire du bord d'attaque BA de l'aube de destination P. Ainsi, aucune ondulation ou pliure indésirable n'apparaît sur les flancs 16, 18 au cours de cette étape d'assemblage 110.

Le procédé selon l'invention peut alternativement, ou à titre complémentaire, être mis en oeuvre pour fabriquer un renfort de protection du bord de fuite d'une aube, le bord de fuite étant opposé au bord d'attaque par rapport au corps de l'aube. Le renfort de protection de bord de fuite est alors fabriqué de la même manière que le renfort de protection de bord d'attaque tel que décrit ci-dessus ; seul le bord de destination dudit renfort change lors de l'application de l'étape d'assemblage 110.

## Revendications

1. Procédé de fabrication d'un renfort de protection du bord d'attaque (BA) ou de fuite d'une aube (P), le bord d'attaque (BA) ou de fuite étant courbe, le procédé comprenant des étapes de :
• aplatissage (102) d'un tube (1) creux de sorte à former au moins une ligne de pliage (6) s'étendant le long du tube (1),
• ouverture (104) du tube (1) aplati par découpage du tube (1) le long d'une ligne de découpe (8) opposée à la ligne de pliage (6) par rapport au tube (1), de sorte à former deux flancs (16, 18) reliés à la ligne de pliage (6) et destinés à être rapportés sur l'intrados et l'extrados de l'aube (P),
le procédé étant **caractérisé par** une étape préliminaire de :
• cintrage (100) du tube (1) creux réalisé avant l'aplatissage (102) et adapté pour que la ligne de pliage (6) après aplatissage (102) soit courbe et sensiblement complémentaire du bord d'attaque (BA) ou de fuite courbe de l'aube (P).

2. Procédé selon la revendication précédente, dans lequel le cintrage (100) est un cintrage à froid.

3. Procédé selon l'une des revendications précédentes, dans lequel l'aplatissage (102) du tube (1) creux forme sur le tube (1) deux lignes de pliage (6, 8) opposées, la ligne de découpe (8) étant l'une des deux lignes de pliage.

4. Procédé selon l'une des revendications précédentes, dans lequel le tube (1) est en métal.

5. Procédé selon l'une des revendications précédentes, comprenant en outre une étape d'emboutissage (106) du tube (1) ouvert de sorte à conformer les flancs (16, 18) de façon complémentaire à l'intrados et l'extrados de l'aube (P),

6. Procédé selon la revendication précédente, dans lequel le tube (1) ouvert est embouti au moyen d'un poinçon (EM) dans une gorge (G) formée dans une matrice (EF), la gorge (G) étant de profondeur adaptée pour qu'au moins un des flancs du tube (16, 18) présente une partie d'extrémité libre (20, 22) dépassant hors de la gorge (G) lorsque la ligne de pliage est en butée contre le fond de la gorge (G), le procédé comprenant en outre une découpe de la partie d'extrémité libre (20, 22).

7. Procédé selon l'une des revendications 5 et 6, dans lequel le tube 1 ouvert est embouti au moyen d'un poinçon dans une gorge formée dans une matrice, la gorge présentant deux ouvertures latérales opposées et une longueur mesurée entre les deux ouvertures latérales inférieure à la longueur de la ligne de pliage du tube 1 ouvert, le tube 1 ouvert étant positionné dans la gorge (G) de sorte que deux parties d'extrémité longitudinale libres (24, 26) dépassent hors des deux ouvertures latérales (O) de la gorge (G), le procédé comprenant en outre la découpe d'au moins une desdites parties d'extrémité longitudinale libres (24, 26).

8. Procédé selon l'une des revendications précédentes, dans lequel au moins une découpe est une découpe au laser.

9. Procédé selon l'une des revendications précédentes, dans lequel au moins une découpe comprend une électro-érosion par fil.

10. Procédé de fabrication d'une aube renforcée comprenant des étapes de :
• fabrication d'un renfort de protection à l'aide du procédé selon l'une des revendications précédentes,
• fixation du renfort de protection sur une aube (P) comprenant un bord courbe d'attaque (BA) ou de fuite, la ligne de pliage (6) du renfort étant rapportée contre le bord courbe d'attaque (BA) ou de fuite de l'aube (P) et les flancs (16, 18 étant rapportés sur l'intrados et l'extrados de l'aube (P).

## Patentansprüche

1. Verfahren zur Herstellung einer schützenden Verstärkung der Vorder- (BA) oder Hinterkante einer Schaufel (P), wobei die Vorder- (BA) oder Hinterkante gekrümmt ist, wobei das Verfahren Schritte umfasst, zum:
• Flachdrücken (102) eines hohlen Rohres (1), um mindestens eine Falzlinie (6) zu bilden, die sich entlang des Rohres (1) erstreckt,
• Öffnen (104) des flachgedrückten Rohres (1) durch Schneiden des Rohres (1) entlang einer Schneidlinie (8) gegenüber der Falzlinie (6) bezogen auf das Rohr (1), um zwei Flanken (16, 18) zu bilden, die an der Falzlinie (6) verbunden, und dazu bestimmt sind, um an der Druckseite und der Saugseite der Schaufel (P) beigebracht zu werden,
wobei das Verfahren **gekennzeichnet ist durch** einen vorbereitenden Schritt zum:
• Biegen (100) des hohlen Rohres (1), durchgeführt vor dem Flachdrücken (102) und ausgeführt, damit die Falzlinie (6) nach dem Flachdrücken (102) gekrümmt ist, und im Wesentlichen ergänzend zu der gekrümmten Vorder-(BA) oder Hinterkante der Schaufel (P).

2. Verfahren nach dem vorstehenden Anspruch, wobei das Biegen (100) ein Kaltbiegen ist.

3. Verfahren nach einem der vorstehenden Ansprüche, wobei das Flachdrücken (102) des hohlen Rohres (1) auf dem Rohr (1) zwei gegenüberliegende Falzlinien (6, 8) bildet, wobei die Schneidlinie (8) eine der beiden Falzlinien ist.

4. Verfahren nach einem der vorstehenden Ansprüche, wobei das Rohr (1) aus Metall ist.

5. Verfahren nach einem der vorstehenden Ansprüche, weiter einen Tiefziehschritt (106) des offenen Rohres (1) umfassend, um die Flanken (16, 18) in ergänzender Art zu der Druckseite und der Saugseite der Schaufel (P) anzupassen.

6. Verfahren nach dem vorstehenden Anspruch, wobei das offene Rohr (1) anhand einer Stanze (EM) in einer Nut (G) tiefgezogen wird, die in einer Matrix (EF) gebildet ist, wobei die Nut (G) von einer Tiefe ist, die angepasst ist, damit mindestens eine der Flanken des Rohres (16, 18) einen freien Endabschnitt (20, 22) aufweist, der aus der Nut (G) herausragt, wenn die Falzlinie auf Anschlag am Boden der Nut (G) ist, wobei das Verfahren weiter ein Schneiden des freien Endabschnitts (20, 22) umfasst.

7. Verfahren nach einem der Ansprüche 5 und 6, wobei das offene Rohr 1 anhand einer Stanze in einer Nut tiefgezogen wird, die in einer Matrix gebildet ist, wobei die Nut zwei gegenüberliegende seitliche Öffnungen und eine gemessene Länge zwischen den beiden seitlichen Öffnungen aufweist, die kleiner als die Länge der Falzlinie des offenen Rohres 1 ist, wobei das offene Rohr 1 in der Nut (G) positioniert ist, sodass zwei freie Längsendabschnitte (24, 26) aus den beiden seitlichen Öffnungen (O) der Nut (G) herausragen, wobei das Verfahren weiter das Schneiden von mindestens einem der freien Längsendabschnitte (24, 26) umfasst.

8. Verfahren nach einem der vorstehenden Ansprüche, wobei mindestens ein Schneiden ein Laser-Schneiden ist.

9. Verfahren nach einem der vorstehenden Ansprüche, wobei mindestens ein Schneiden eine Drahtelektroerosion umfasst.

10. Verfahren zur Herstellung einer verstärkten Schaufel, umfassend Schritte zum:
• Herstellen einer schützenden Verstärkung mithilfe eines Verfahrens nach einem der vorstehenden Ansprüche,
• Befestigen der schützenden Verstärkung auf einer Schaufel (P), umfassend eine gekrümmte Vorder- (BA) oder Hinterkante, wobei die Falzlinie (6) der Verstärkung an der gekrümmten Vorder- (BA) oder Hinterkante der Schaufel (P) beigebracht wird, und die Flanken (16, 18) an der Druckseite und der Saugseite der Schaufel (P) beigebracht werden.

## Claims

1. Method for manufacturing a protective reinforcement of a leading (BA) or trailing edge of a blade (P), wherein the leading (BA) or trailing edge is curved, wherein the method comprises:
• flattening (102) a hollow tube (1) so as to form at least one fold line (6) extending along the tube (1),
• opening (104) the flattened tube (1) by cutting the tube (1) along a cut line (8) opposite to the fold line (6) with respect to the tube (1), so as to form two flanks (16, 18) connected to the fold line (6) and designed to be applied to the pressure side and the suction side of the blade (P),
the method being **characterized by** a preliminary step of:
• bending (100) the hollow tube (1) before the flattening (102), wherein the bending is adapted so that the fold line (6) after flattening (102) is curved and substantially complementary to the curved leading (BA) or trailing edge of the blade (P).

2. Method according to the preceding claim, wherein the bending (100) is cold bending.

3. Method according to one of the preceding claims, wherein the flattening (102) of the hollow tube (1) forms on the tube (1) two opposite fold lines (6, 8), and wherein the cut line (8) is one of the two fold lines.

4. Method according to one of the preceding claims, wherein the tube (1) is made of metal.

5. Method according to one of the preceding claims, further comprising a step (106) of stamping the open tube (1) so as to shape the flanks (16, 18) in a manner complementary to the pressure side and the suction side of the blade (P).

6. Method according to the preceding claim, wherein the open tube (1) is stamped by means of a stamp (EM) into a groove (G) formed in a die (EF), wherein the groove (G) has a depth adapted so that at least one of the flanks of the tube (16, 18) has a free end portion (20, 22) projecting out of the groove (G) when the fold line is in abutment against the bottom of the groove (G), wherein the method further comprises cutting the free end portion (20, 22).

7. Method according to one of claims 5 and 6, wherein the open tube (1) is stamped by means of a stamp into a groove formed in a die, wherein the groove has two opposite lateral openings and a length measured between the two lateral openings less than the length of the fold line of the open tube (1), wherein the open tube (1) is positioned in the groove (G) so that two free longitudinal end portions (24, 26) thereof project out of the two lateral openings (O) of the groove (G), wherein the method further comprises cutting at least one of said free longitudinal end portions (24, 26).

8. Method according to one of the preceding claims, wherein at least one cutting operation is a laser cutting.

9. Method according to one of the preceding claims, wherein at least one cutting comprises wire EDM.

10. Method for manufacturing a reinforced blade comprising steps of:
• manufacturing a protective reinforcement using a method according to one of the preceding claims,
• attaching the protective reinforcement to a blade (P) comprising a curved leading (BA) or trailing edge, wherein the fold line (6) of the reinforcement is applied against the leading (BA) or trailing edge of the blade (P) and wherein the flanks (16, 18) are applied to the pressure side and the suction side of the blade (P).
